# EUROPEAN PATENT SPECIFICATION

(11) **EP 1 093 643 B1**
(45) Date of publication and mention of the grant of the patent: **21.05.2003**
(21) Application number: 99904395.3
(22) Date of filing: 03.02.1999
(51) Int. Cl.: G07G 1/14

(54) **PROCESS, SYSTEM AND COMPUTER READABLE MEDIUM FOR CONSOLIDATION OF COMMUNICATION AMONG PERIPHERAL DEVICES IN A RETAIL STORE ENVIRONMENT**
VERFAHREN, SYSTEM UND KOMPUTERLESBARER TRÄGER ZUR BEFESTIGUNG DER DATENÜBERTRAGUNG ZWISCHEN PERIPHERIEGERÄTEN IN EINER KAUFHAUS-UMGEBUNG
PROCEDE, SYSTEME ET SUPPORT LISIBLE PAR ORDINATEUR PERMETTANT DE CONSOLIDER LA COMMUNICATION ENTRE PERIPHERIQUES DANS UN ENVIRONNEMENT DE MAGASIN DE DETAIL

(30) Priority: 06.01.1999 US 225449
(43) Date of publication of application: 25.04.2001
(73) Proprietor: Catalina Marketing International, Inc., St. Petersburg, FL 33716 (US)
(72) Inventor: WILLIAMS, Eric, N., Tampa, FL 33609 (US); CLACK, James, B., Oldsmar, FL 34677-5045 (US); GREENFIELD, Steven, J., Palm Harbor, FL 34685 (US)
(74) Representative: Molyneaux, Martyn William
(86) International application number: US9901857
(87) International publication number: WO00041145

(56) References cited:
- WO-A-93/09515
- WO-A-97/50064
- WO-A-98/37476

## Description

### CROSS REFERENCES TO RELATED APPLICATIONS

The present invention is related to commonly owned U.S. Patent Numbers 4,723,212; 4,910,672; 5,173,851; and 5.612,868 and U.S. Patent Application Serial Number 08/663,680, filed on June 14, 1996.

### BACKGROUND OF THE INVENTION

### Field of the Invention:

This invention relates generally to interconnected computer systems and, more particularly, to computer systems used in a retail store environment.

### Discussion of Background:

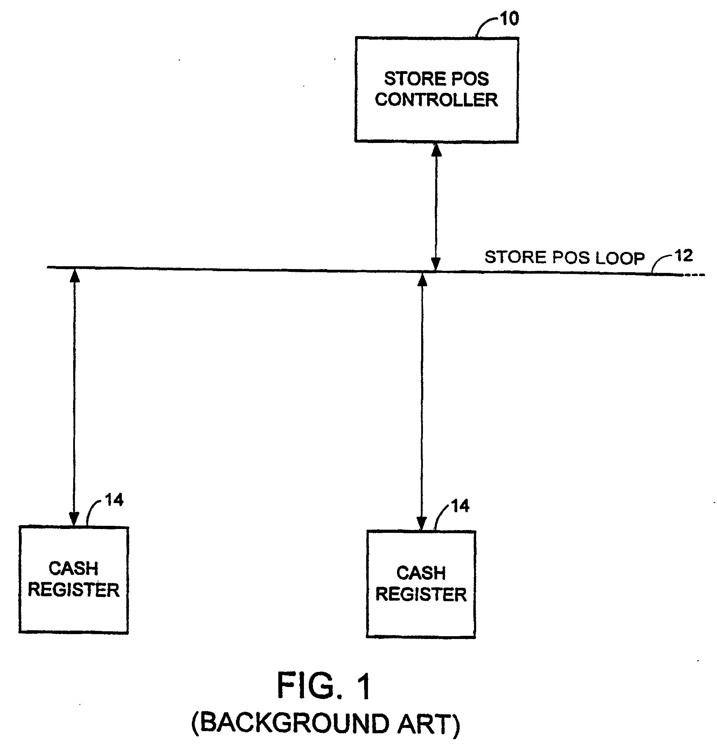

FIG. 1 shows a conventional retail store environment, including a store point-of-sale (POS) controller 10, a store point-of-sale loop (POS loop) 12, and multiple cash registers or point of sale terminals 14. two of which are shown. The store POS controller 10 communicates with the cash registers 14 through the store POS loop 12, which is a data bus that extends through the store from one cash register 14 to the next and to which all the cash registers 14 and the store POS controller 10 are connected. The store POS controller 10 has associated database files (not shown) for storing data pertaining to store activities, such as an item record file defining the items available for sale in the store.

A major difficulty with the configuration shown in FIG. 1 is that this configuration does not support supplemental functions, such as in-store printing of discount coupons or other incentives, reading and processing coupons brought to the store by customers, and reading other coded items at the point of sale, such as bank cards and checks.

WO-A-9309515 discloses a system for automating data acquisition and processing at a point-of-sale in a retail outlet. In one embodiment there is a first local area network (LAN) of POS terminals for initiating merchandise purchase transactions. All of the purchase transactions in the first LAN are passively monitored to acquire primary purchase data. A second LAN of terminal devices inputs secondary data including discount coupon information and bank card information to a system controller. However, a principal difficulty with such a configuration is that multiple sets of connecting lines have to be run from the processor to the peripheral devices located at or near the POS terminal. Further, if the need arises for additional peripheral devices then they are required to be connected by separate connecting lines to a supplemental processor. A disadvantage of such an arrangement is the duplication of cost and effort involved in connecting lines to each of the peripheral devices. Moreover, installation of new supplemental processing applications is disruptive to normal store operations because new wires need to be installed.

### SUMMARY OF THE INVENTION

Accordingly, one object of this invention is to provide a novel process and system for interconnection of supplemental computer components in a retail store environment.

The above and other objects are achieved according to the present invention by providing a new and improved process, system, computer readable medium and computer program for providing a point-of-sale computer system in which connections between a supplemental computer and various distributed peripheral devices are simplified. Briefly, and in general terms, the system of the invention includes (a) at least one point-of-sale checkout station having at least one cash register and at least one peripheral device; (b) a store communication bus connected to the at least one cash register; (c) a store controller connected to the store communication bus, for controlling and supplying data to the at least one cash register; (d) a supplemental processor for performing tasks supplemental to tasks performed by the store controller; (e) at least one port concentrator associated with a respective point-of-sale checkout station of the at least one point-of-sale checkout station, the at least one port concentrator having multiple input/output ports, one input/output port of the multiple input/output ports coupled to the least one peripheral device of the respective point-of-sale checkout station: and (f) a port concentrator communication network coupled to the supplemental processor and to the at least one port concentrator. The supplemental processor communicates with the at least one peripheral device of the at least one point-of-sale checkout station through the port concentrator communication network and a respective port concentrator of the at least one port concentrator.

More specifically, each port concentrator further includes a buffer memory for storing data received from any of the input/output ports, prior to transmission of the data through another of the input/output ports; and a device for regulating data flow in the port concentrator, to and from each of the input/output ports. The port concentrator communication network is preferably a local area network and each port concentrator also includes a local area network controller and transceiver for communicating with the port concentrator communication network.

In one claimed embodiment of the invention, the additional peripheral device is a scanning device for reading product data. In another embodiment, the additional peripheral device is a ''wedge" data input device for reading consumer data from a data-bearing record presented by a consumer. The supplemental processor in the illustrative embodiment of the invention controls a coupon printer at each point-of-sale checkout station, and determines whether coupons should be printed based on data received from the point-of-sale checkout station through the port concentrator.

The present invention also includes a computer readable medium storing program instructions by which the processes of the invention can be performed when the stored program instructions are appropriately loaded into a memory and executed by a microprocessor.

It will be appreciated from the foregoing summary that the present invention represents a significant improvement in the field of point-of-sale computer systems. In particular, the invention greatly facilitates integration, expansion and testing of point-of-sale computer systems in retail stores. Port concentrators are used in conjunction with a communication network, to provide data connections between the supplemental computer, when used to control discount coupon generation, for example, with printers and other peripheral devices located at point-of-sale stations throughout the store.

Other aspects and advantages of the invention will become apparent from the more detailed description that follows, taken in conjunction with the drawings, which are briefly described below.

### BRIEF DESCRIPTION OF THE DRAWINGS

A more complete appreciation of the invention and many of the attendant advantages thereof will be readily obtained as the same becomes better understood by reference to the following detailed descriptions when considered in connection with the accompanying drawings, wherein:
FIG. 1 is block diagram of a conventional computer interconnection architecture of a retail store environment;
FIG. 2 is a block diagram of a computer interconnection architecture of a retail store environment of FIG. 1, supplemented with additional components to handle various additional functions;
FIG. 3 is a block diagram of a computer interconnection architecture of a retail store environment of FIG. 2 further including port concentrators according to the present invention;
FIG. 4 is block diagram of a port concentrator used in the architecture of FIG. 3;
FIGS. 5A and 5B are state diagrams illustrating operation of the port concentrator in communicating with a printer device;
FIGS. 6A and 6B are state diagrams illustrating operation of the port concentrator in communicating with a wedge peripheral device; and
FIGS. 7A and 7B are state diagrams illustrating operation of the port concentrator in communicating with network device.

### DESCRIPTION OF THE PREFERRED EMBODIMENTS

Point-of-sale (POS) computer systems in stores have been supplemented with additional components to handle such functions as in-store printing of discount coupons or other incentives, reading and processing coupons brought to the store by customers, and reading other coded items at the point of sale, such as bank cards and checks. For example, commonly owned U.S. Patent Numbers 4,723,212; 4,910,672; 5,173,851; and 5,612,868 and U.S. Patent Application Serial Number 08/663,680, filed on June 14, 1996, disclose systems for generating discount coupons in response to various sales transaction events detected at the point of sale.

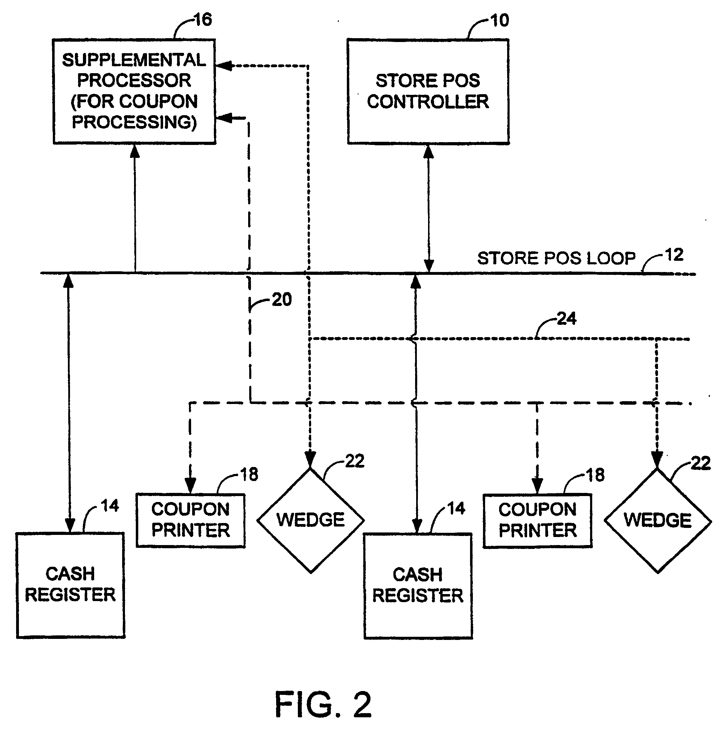

Referring now to the drawings, wherein like reference numerals designate identical or corresponding parts throughout the several views, and more particularly to FIG. 2 thereof, there is illustrated a computer system architecture intended for use in a retail store environment, and particularly for use in applications that supplement the normal functions of a point-of-sale computer system.

FIG. 2 shows relevant portions of a store point-of-sale system, including a store point-of-sale (POS) controller, indicated by reference numeral 10, a store point-of-sale loop (POS loop) 12, and multiple cash registers 14, two of which are shown. The store POS controller 10 communicates with the cash registers 14 through the store POS loop 12, which is a data bus that extends through the store from one cash register to the next. The store POS controller 10 has associated database files (not shown) for storing data pertaining to store activities, such as an item record file defining the items available for sale in the store. A supplemental processor 16 is provided and performs supplemental processing functions, such as in-store generation of discount coupons and other purchase incentives, etc. The supplemental processor 16 is connected to the store POS loop 12 and can monitor POS operations taking place at the various cash registers 14. Each cash register 14 in such a system has an associated coupon printer 18. However, it will be appreciated that each coupon printer 18 or cash register 14 could include a "dual station" printer function for printing both coupons and receipts. When a consumer purchases certain designated items and presents them for purchase at the cash register 14, the supplemental processor 16 may generate discount coupons conditioned on the items purchased and other factors. Thus the supplemental processor 16 is connected to each of the coupon printers 18, as shown by broken lines 20.

The supplemental processor 16 may also be connected to other peripheral devices associated with each cash register 14. For example, each cash register 14 may have an associated wedge 22. A wedge is a data input device that decodes or reads data, such as bar code data or data from magnetically encoded credit cards. The wedge 22 communicates the decoded information through a keyboard port on a computer associated with cash register 14. Typically, the wedge device 22 plugs into the computer keyboard port, and the keyboard plugs into the wedge. In some POS functions, a consumer's credit card or store loyalty card is scanned in the wedge device 22 and the information is used by the supplemental processor 16 when recording purchase transactions. The wedges 22 are connected to the supplemental processor 16 through another set of lines, indicated by the broken lines 24.

A major difficulty with the configuration shown in FIG. 2 is that multiple sets of connecting lines, such as the lines 20 and 24, have to be run from the supplemental processor 16 to peripheral devices, such as the coupon printers 18 and the wedge devices 22, located at or near the cash registers 14. In other supplemental processing applications, the need may arise for additional peripheral devices, all to be connected by separate lines to the supplemental processor 16. An obvious disadvantage of this arrangement is the duplication of cost and effort involved in connecting to each set of peripheral devices. Moreover, installation of new supplemental processing applications is disruptive to normal store operations, because new wires must be put in place using overhead or under-floor wiring paths.

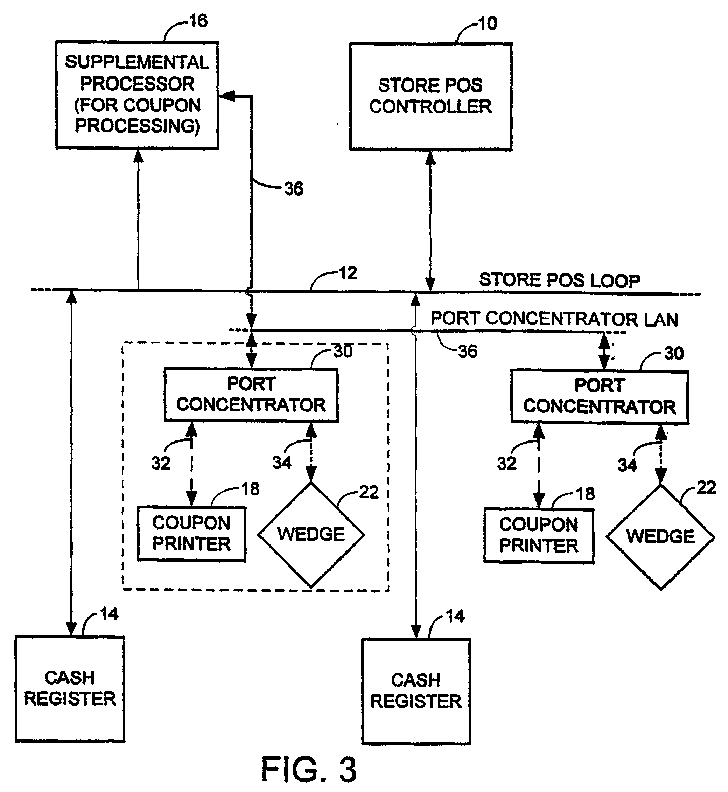

The embodiment shown in FIG. 3 addresses the above-noted concerns, wherein the peripheral devices associated with each cash register 14 are connected to a port concentrator 30. Thus, each coupon printer 18 is connected to a port concentrator 30 over lines 32, and each wedge device 22 is connected to the port concentrator 30 over lines 34. The port concentrators 30 are connected to a local area network (LAN) 36, which couples them to the supplemental processor 16. Therefore, connection with the supplemental processor 16 is accomplished using a single line (the LAN 36), which may take the form of a coaxial cable or an optical fiber. Alternatively, with appropriate design the LAN 36 may operate over lines 36 in the form of twisted pairs of conductors, wireless communication links, etc., as will be appreciated by those skilled in the relevant arts. Furthermore, as will be readily appreciated, a port concentrator 30 may be included within the coupon printer 18 and/or the wedge 22, as is shown by the dashed line in FIG. 3.

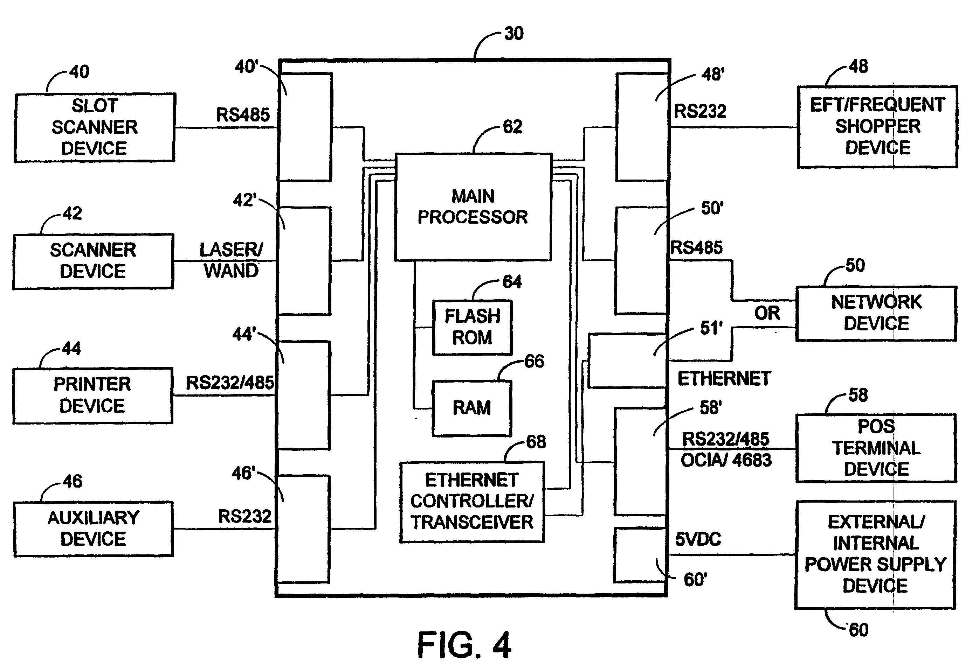

FIG. 4 is a block diagram of the port concentrator 30 in a more generalized form than is contemplated in FIG. 3. The configuration of FIG. 3 perpetuates the tradition that conventional POS processing should be kept separate from any supplemental processing, such as coupon generation or redemption by a third party not affiliated with the retailer that manages the store or any of the manufacturers whose goods are sold in the store. Thus, in FIG. 3 the port concentrator 30 is shown as being used to connect the third party's supplemental processor 16 with supplemental peripheral devices, such as the printers 18 and wedges 22. A logical extension of the port concentrator concept, however, is to connect all of the peripheral devices associated with each cash register 14 to a port concentrator for that cash register.

Accordingly, FIG. 4, shows an exemplary embodiment of the port concentrator 30 as having multiple input/output ports, for connection to, for example, (i) a slot scanner device 40 for scanning purchased items as they are passed across a scanning slot. connected via port 40', (ii) a scanner device 42, such as a scanning wand or other device, connected via port 42' (iii) a printer device 44, such as the printer 18, connected via port 44', (iv) an auxiliary or peripheral device 46, connected via port 46', (v) an EFT/frequent shopper device 48 for handling input of identification or credit cards from shoppers, connected via port 48', (vi) a network device 50, connected via ports 50' and 51' using, for example, Ethernet, EIA RS485, etc., (vii) a POS terminal device 58, connected via port 58', and (viii) an external/internal power supply device 60, connected via port 60'. The letter designations on the lines from the various port indicate by way of example the types of interface standards that may be employed in each case. However, as will be appreciated, other standards, such as TCP/IP, wireless communication links, fiber optic links, etc., as are known in the art may be employed. The port concentrator 30 further includes a main processor 62, a read-only memory (ROM) 64, such as a flash read-only memory, etc., a random access memory (RAM) 66 and an Ethernet controller/transceiver 68.

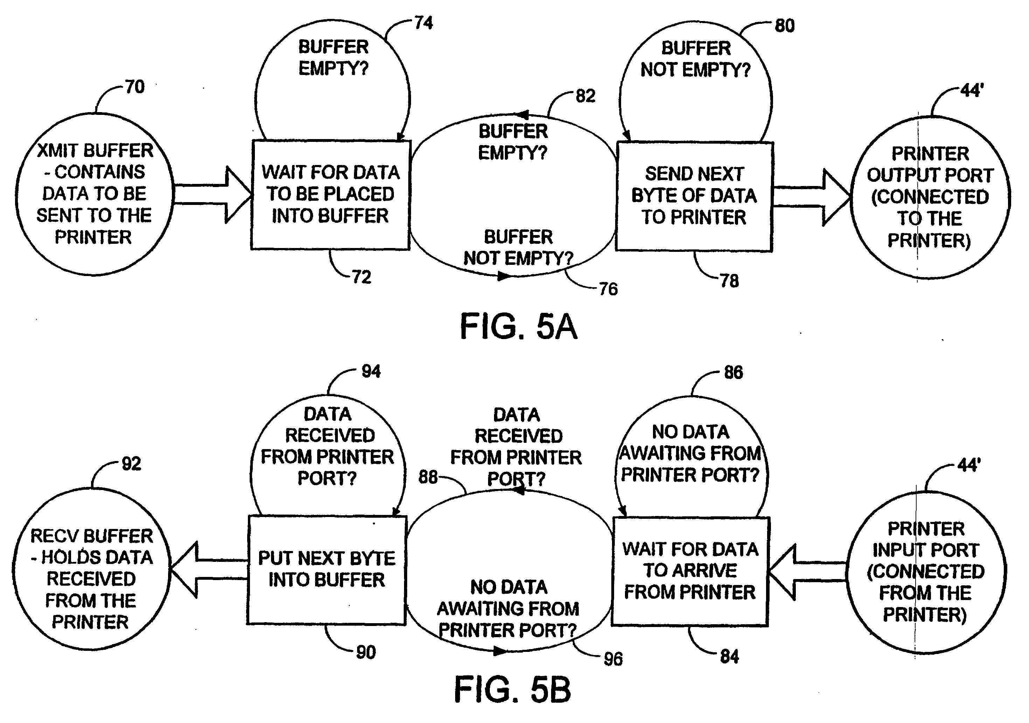

Basically, the function performed by the main processor 62 of the port concentrator 30 is to regulate the flow of data to and from each peripheral device connected to the port concentrator via ports 40'-60'. The processor 62 uses transmit and receive buffers in the RAM 66 to achieve this end, as will be explained with reference to the exemplary state diagrams in FIGS. 5-7.

FIGS. 5A and 5B are exemplary state diagrams showing transmission of data from the port concentrator 30 to the printer 18 and from the printer 18 to the port concentrator, respectively. As shown in the circle 70 at the left of FIG. 5A, a transmit buffer (in RAM 66) contains data to be sent to the printer 18. In the state indicated by block 72, the processor 62 waits for data to be placed in the printer buffer. If the buffer is empty, the processor 62 continues to wait in this state, as indicated by line 74. When the buffer is no longer empty, as indicated by line 76, the processor 62 transitions to state 78, in which a next byte of data is transmitted from the transmit buffer to the printer output port 44'. The processor 62 remains in this state and continues to transmit data to the printer port 44', as indicated by line 80. When the transmit buffer has been emptied, as indicated by line 82, the processor 62 makes a transition back to state 72, where it waits for more data to be placed in the buffer.

The exemplary state diagram of FIG. 5B illustrates the flow of data back from the printer 18, to indicate printer status or other information. In state 84, the processor 62 waits for data to arrive from the printer, as indicated by line 86. As soon as data is received from the printer port, as indicated by line 88, the processor assumes state 90, and transfers a byte of input data to a receive buffer 92, also included in RAM 66. The processor remains in state 90 so long as data continues to be received from the printer port, as indicated by line 94. When there is no longer any data awaiting to be input from the printer port, as indicated by line 96, the processor 62 makes a transition back to state 84 to await more data. It will be understood that the processor 62 is designed to operate in both the state diagrams of FIGS. 5A and 5B at the same time. The printer port 44' is bi-directional but only operates in one direction at a time, and the processor 62 can readily sense whether the printer port is ready to receive data or ready to transmit data.

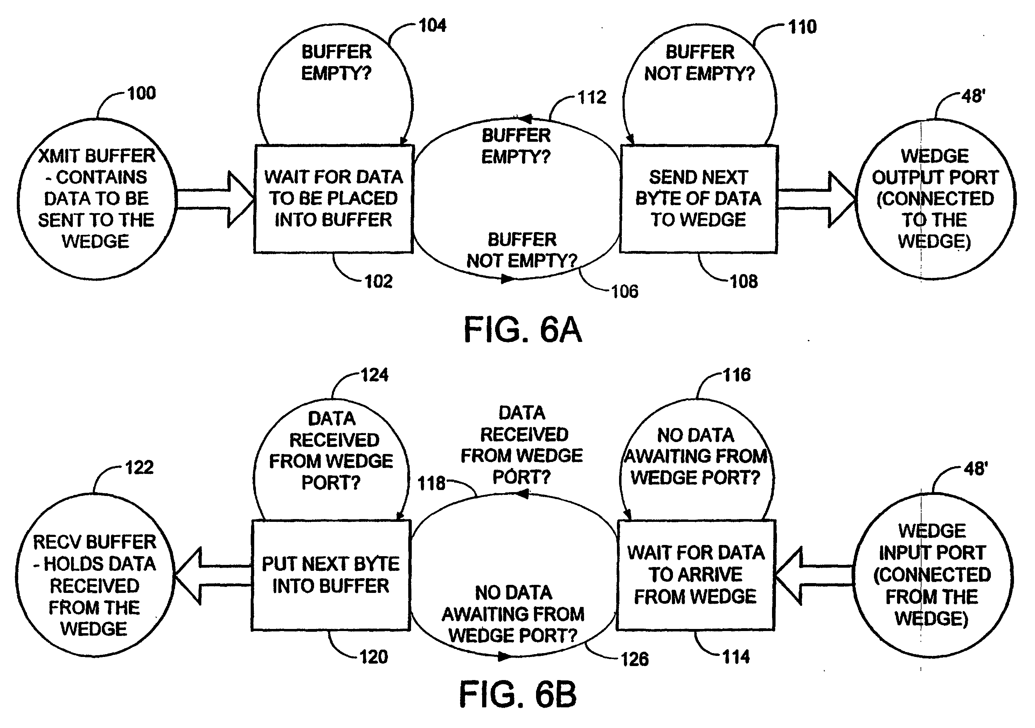

FIGS. 6A and 6B are exemplary diagrams similar to FIGS. 5A and 5B, but show the states assumed by the processor 62 in transmitting data to and receiving data from a wedge port, which may be, for example, the EFT/frequent shopper port 48' in FIG 4. Another transmit buffer 100 holds data to be sent to the wedge, and state 102 is assumed when the processor 62 is waiting for data to be placed in the buffer 100. This state is maintained so long as the buffer is empty, as indicated by line 104. When the buffer is not empty, as indicated by line 106, there is a transition to state 108, in which a byte at a time of data is sent to the wedge output port 48'. So long as there is data in the transmit buffer 100, as indicated by line 110, the processor 62 remains in this state. When the buffer 100 is emptied, as indicated by line 112, there is a transition back to state 102 to await more data.

Receipt of data from the wedge port 48' is depicted in the exemplary diagram of FIG. 6B. The processor 62 waits for input data in state 114 and, as indicated by line 116, remains in that state while no data is supplied by the wedge port 48'. When data is received from the wedge port 48', as indicated by line 118, there is a transition to state 120, in which a byte of data is transferred to an input buffer 122. Input data bytes are continually transferred to the input buffer 122 in this state so long as data received from the wedge port 48', as indicated by line 124. When no more data is supplied by the wedge port 48', as indicated by line 126, there is a transition back to state 114 to await more input data.

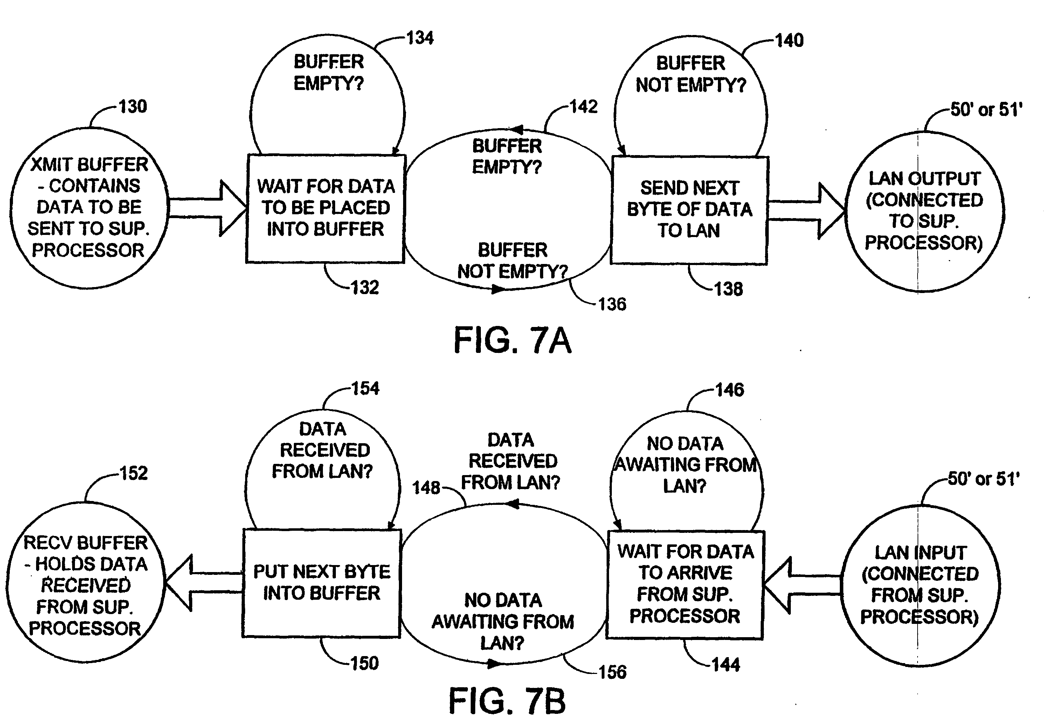

FIGS. 7A and 7B are exemplary state diagrams depicting output and input operations with respect to the LAN port 50' or 51'. Yet another transmit buffer 130 contains data to sent to the supplemental processor 16 through the LAN 36 and state 132 is assumed when the processor 62 is waiting for data to be placed in the buffer 130. This state is maintained so long as the buffer is empty, as indicated by line 134. When the buffer is not empty, as indicated by line 136, there is a transition to state 138, in which a byte at a time of data is sent to the LAN port 50' or 51'. So long as there is data in the transmit buffer 130, as indicated by line 140, the processor 62 remains in this state. When the buffer 130 is emptied, as indicated by line 142, there is a transition back to state 132 to await more data.

Receipt of data from the LAN port 50' or 51' is depicted in the exemplary diagram of FIG. 7B. The processor 62 waits for input data in state 144 and, as indicated by line 146, remains in that state while no data is supplied by the LAN port 50' or 51'. When data is received from the LAN port 50' or 51', as indicated by line 148, there is a transition to state 150, in which a byte of data is transferred to an input buffer 152. Input data bytes are continually transferred to the input buffer 152 in this state so long as data received from the LAN port 50' or 51', as indicated by line 154. When no more data is supplied by the LAN port 50' or 51', as indicated by line 156, there is a transition back to state 144 to await more input data.

In addition, similar exemplary state diagrams (not shown) depicting output and input operations with respect to the ports 40', 42', 46', and 58' may be derived based on the teachings of the present invention, as will be appreciated by those skilled in the computer arts.

The mechanisms and processes set forth in the present description may be implemented using a conventional general purpose microprocessor (e.g., the main processor 62 and the supplemental processor 16) programmed according to the teachings in the present specification (e.g., Figs. 5-7), as will be appreciated to those skilled in the relevant art(s). Appropriate software coding can readily be prepared by skilled programmers based on the teachings of the present disclosure, as will also be apparent to those skilled in the relevant art(s). However, as will be readily apparent to those skilled in the art, this invention may also be implemented by the preparation of application-specific integrated circuits or by interconnecting an appropriate network of conventional component circuits.

The present invention thus also includes a computer-based product which may be hosted on a storage medium and include instructions which can be used to program a microprocessor to perform a process in accordance with the present invention. This storage medium can include, but is not limited to, any type of disk including floppy disks, optical disks, CD-ROMs, magneto-optical disks, ROMs, RAMs, EPROMs, EEPROMs, flash memory, magnetic or optical cards, or any type of media suitable for storing electronic instructions.

Although the preferred embodiment of the invention is described in terms of a port concentrator 30 having multiple input/output ports, such as a slot scanner device port 40', a scanner device port 42', a printer device port 44', an auxiliary device port 46', an EFT/frequent shopper device port 48', a network device ports 50' and 51', and a POS terminal device port 58', various other types of ports and interfaces, such as smart card, retinal scan, fingerprint analysis, voice analysis, image analysis, TCP/IP (i.e., internet), etc., ports and interfaces may be added, by including appropriate hardware/software in the port concentrator 30, as will be apparent to those skilled in the relevant arts.

It will be appreciated from the foregoing that the present invention represents a significant advance in the field of point-of-sale computer systems. In particular, the invention provides a system configuration whereby multiple peripheral devices located at multiple cash registers in a store may be easily connected to a central or supplemental processor without the need for running multiple sets of interconnecting wires through the store.

It will also be appreciated that, although an embodiment of the invention has been described in detail for purposes of illustration, various modifications may be made without departing from the scope of the invention. Accordingly, numerous modifications and variations of the present invention are possible in light of the above teachings. It is therefore to be understood that, within the scope of the appended claims, the invention may be practiced otherwise than as specifically described herein.

## Claims

1. A point-of-sale computer system, comprising:
(a) at least one point-of-sale checkout station having at least one cash rcgister (14) and at least one peripheral device (18);
(b) a store communication bus (12) connected to said at least one cash register;
(c) a store controller (10) connected to said store communication bus, for controlling and supplying data to said at least one cash register,
(d) a supplemental processor (16) for performing tasks supplemental to tasks performed by said store controller,
(e) at least one port concentrator (30) associated with a respective point-of-sale checkout station of said at least one point-of-sale checkout station, said at least one port concentrator having multiple input/output ports, one input/output port of said multiple input/output ports coupled to said least one peripheral device of said respective point-of-sale checkout station; and
(f) a port concentrator communication network (36) coupled to said supplemental processor and to said at least one port concentrator;
(g) wherein said supplemental processor communicates with said at least one peripheral device of said at least one point-of-sale checkout station through said port concentrator communication network and a respective port concentrator of said at least one port concentrator.

2. The system of claim 1, wherein said at least one port concentrator (30) further includes:
(a) a buffer memory (64, 66) for storing data received from any one of said multiple input/output ports, prior to transmission of said data through another of said multiple input/output ports; and
(b) means (62, 68) for regulating data flow in said at least one port concentrator, to and from said multiple input/output ports.

3. The system of claim 1, wherein:
(a) said port concentrator communication network is a local area network (36); and
(b) said at least one port concentrator (30) further includes a local area network controller and transceive (68) for communicating with said port concentrator communication network.

4. The system of claim 1, wherein the at least one peripheral device is one of a scanning device (42) for reading product data, a wedge data input device (22) for reading consumer data from a data-bearing record presented by a consumer, and an auxiliary device (46) for performing auxiliary functions.

5. The system of claim 1. wherein:
(a) said at least one point-of-sale checkout station further comprises at least one coupon printer (44) coupled to a respective port concentrator of said at least one port concentrator, and
(b) said supplemental processor (16) communicates with said at least one coupon printer of said at least one point-of-sale checkout station through said port concentrator communication network and said respective port concentrator of said at least one port concentrator.

6. The system of claim 5, wherein said supplemental processor (16) controls a respective coupon printer (44) of said at least coupon printer at a respective point-of-sale checkout station of said at least one point-of-sale checkout station, and determines whether coupons should be printed based on data received from said respective point-of-sale checkout station through a respective port concentrator of said at least one port concentrator.

7. The system of anyone of claim 1 through 6, wherein:
(a) said at least one point-of-sale checkout station comprises a plurality of checkout stations; and
(b) said at least one port concentrator (30) comprises a plurality of port concentrators.

8. A port concentrator for use in point-of-sale computer system including at least one point-of-sale checkout station having a cash register (14), a coupon printer (44) and at least one peripheral device (46), the port concentrator comprising:
(a) a first port for coupling to said at least one peripheral device; and
(b) a second port for coupling to a supplemental processor via a port concentrator communication network;
(d) wherein said supplemental processor communicates with said at least one peripheral device at a respective point-of-sale checkout station of said at least one point-of-sale checkout station through said port concentrator communication network and a respective port concentrator associated with said respective point-of-sale checkout station.

9. The port concentrator of claim 8, further comprising:
(a) a buffer memory (64, 66) for storing data received from any of said first and second ports, prior to transmission of said data through another of said first and second ports; and
(b) means for regulating data flow in said port concentrator; to and from each of said first and second ports.

10. The port concentrator of claim 8, wherein:
(a) said port concentrator communication network is a local area network (36); and
(b) said port concentrator also includes a local area network controller (68) and transceiver for communicating with said port concentrator communication network.

11. The port concentrator of claim 8, wherein said at least one peripheral device is one of a scanning device (42) for reading product data, a wedge data input device (22) for reading consumer data from a data-bearing record presented by a consumer, and an auxiliary device (46) for performing auxiliary functions.

12. The port concentrator of claim 8, further comprising:
(a) a third port for coupling to said coupon printer,
(b) wherein said supplemental processor communicates with said coupon printer at a respective point-of-sale checkout station of said at least one point-of-sale checkout station through said port concentrator communication network and a respective port concentrator associated with said respective point-of-sale checkout station.

13. The port concentrator of claim 12, wherein said supplemental processor controls said coupon printer at a respective point-of-sale checkout station of said at least one point-of-sale checkout station, and determines whether coupons should be printed based on data received from said respective point-of-sale checkout station through said respective port concentrator associated with said respective point-of-sale checkout station.

14. The port concentrator of claim 12, further comprising:
(a) a buffer memory (64, 66) for storing data received from any of said first through third ports, prior to transmission of said data through another of said first through third ports; and
(b) means for regulating data flow in said port concentrator, to and from each of said first through third ports.

15. A process for providing a point-of-sale computer system, comprising:
(a) providing at least one point-of-sale checkout station having at least one cash register (14) and at least one peripheral device (18);
(b) connecting a store communication bus (12) to said at least one cash register;
(c) controlling (10) and supplying data to said at least one cash register via a store controller connected to said store communication bus;
(d) performing tasks supplemental to tasks performed by said store controller via a supplemental processor,
(e) providing at least one port concentrator (30) associated with a respective point-of-sale checkout station of said at least one point-of-sale checkout station, said at least one port concentrator having multiple input/output ports, and coupling one input/output port of said multiple input/output ports to said least one peripheral device of said respective point-of-sale checkout station;
(f) coupling a port concentrator communication network to said supplemental processor and to said at least one port concentrator; and
(g) providing communication between said supplemental processor and said at least one peripheral device of said at least one point-of-sale checkout station through said port concentrator communication network and a respective port concentrator of said at least one port concentrator.

16. The process of claim 15, wherein said step (e) further includes:
(a) providing in said at least one port concentrator a buffer memory (64, 66) for storing data received from any one of said multiple input/output ports, prior to transmission of said data through another of said multiple input/output ports; and
(b) providing in said at least one port concentrator means (68) for regulating data flow in said at least one port concentrator, to and from said multiple input/output ports.

17. The process of claim 15, wherein said port concentrator communication network is a local area network, and further comprising including in said at least one port concentrator a local area network controller and transceiver (68) for communicating with said port concentrator communication network.

18. The process of claim 15, wherein said at least one peripheral device is one of a scanning device (42) for reading product data, a wedge data input device (22) for reading consumer data from a data-bearing record presented by a consumer, and an auxiliary device (46) for performing auxiliary functions.

19. The process of claim 15, further comprising:
(a) including in said at least one point-of-sale checkout station at least one coupon printer (44) coupled to a respective port concentrator of said at least one port concentrator; and
(b) providing communication between said supplemental processor and said at least one coupon printer of said at least one point-of-sale checkout station through said port concentrator communication network and said respective port concentrator of said at least one port concentrator.

20. The process of claim 19, further comprising:
(a) controlling a respective coupon printer of said at least coupon printer at a respective poini-of-sale checkout station of said at least one point-of-sale checkout station via said supplemental processor, and
(b) determining whether coupons should be printed based on data received from said respective point-of-sale checkout station through a respective port concentrator of said at least one port concentrator via said supplemental processor.

21. The process of claim 15, further comprising:
(a) providing a plurality of checkout stations as said at least one point-of-sale checkout station; and
(b) providing a plurality of port concentrators as said at least one port concentrator.

22. The process of claim 16, further comprising:
(a) providing a plurality of checkout stations as said at least one point-of-sale checkout station; and
(b) providing a plurality of port concentrators as said at least one port concentrator.

23. The process of claim 17, further comprising:
(a) providing a plurality of checkout stations as said at least one point-of-sale checkout station; and
(b) providing a plurality of port concentrators as said at least one port concentrator,

24. The process of claim 18, further comprising:
(a) providing a plurality of checkout stations as said at least one point-of-sale checkout station; and
(b) providing a plurality of port concentrators (30) as said at least one port concentrator.

25. The process of Claim 19, further comprising:
(a) providing a plurality of checkout stations as said at least one point-of-sale checkout station; and
(b) providing a plurality of port concentrators (30) as said at least one port concentrator.

26. The process of claim 20, further comprising:
(a) providing a plurality of checkout stations as said at least one point-of-sale checkout station; and
(b) providing a plurality of port concentrators (30) as said at least one port concentrator.

27. A process for providing a port concentrator for use in point-of-sale computer system including at least one point-of-sale checkout station having a cash register (14), a coupon printer (18) and at least one peripheral device (46), comprising the steps of:
(a) providing in said port concentrator a first port for coupling to said at least one peripheral device;
(b) providing in said port concentrator a second port for coupling to a supplemental processor via a port concentrator communication network; and
(d) providing communication between said supplemental processor and said at least one peripheral device at a respective point-of-sale checkout station of said at least one point-of-sale checkout station through said port concentrator communication network and a respective port concentrator associated with said respective point-of-sale checkout station.

28. The process of claim 27, further comprising:
(a) providing in said port concentrator a buffer memory for storing data received from any of said first and second ports, prior to transmission of said data through another of said first and second ports; and
(b) providing in said port concentrator means for regulating data flow in said port concentrator, to and from each of said first and second ports.

29. The process of claim 27, wherein said port concentrator communication network is a local area network, and further including providing in said port concentrator a local area network controller and transceiver for communicating with said port concentrator communication network.

30. The process of claim 27, wherein said at least one peripheral device is one of a scanning device (42) for reading product data, a wedge data input device (22) for reading consumer data from a data-bearing record presented by a consumer, and an auxiliary device (46) for performing auxiliary functions.

31. The process of claim 27, further comprising:
(a) providing in said port concentrator a third port for coupling to said coupon printer;
(b) providing communication between said supplemental processor and said coupon printer at a respective point-of-sale checkout station of said at least one point-of-sale checkout station through said port concentrator communication network and a respective port concentrator associated with said respective point-of-sale checkout station.

32. The process of claim 31, further comprising:
(a) controlling said coupon printer at a respective point-of-sale checkout station of said at least one point-of-sale checkout station via said supplemental processor; and
(b) determining whether coupons should be printed based on data received from said respective point-of-sale checkout station through said respective port concentrator associated with said respective point-of-sale checkout station via said supplemental processor.

33. The process of claim 31, further comprising:
(a) providing is said port concentrator a buffer memory for storing data received from any of said first through third ports, prior to transmission of said data through another of said first through third ports; and
(b) providing is said port concentrator means for regulating data flow in said port concentrator, to and from each of said first through third ports.

34. A computer readable medium storing computer instructions, for performing the steps recited in any one of claims 15-33.

35. A computer program comprising computer program code means adapted to perform all the steps of any of claims 15-33 when that program is run on a computer.

## Patentansprüche

1. Kassenterminal-Computersystem, das folgendes umfasst:
(a) mindestens eine Kassenterminal-Kassenstation mit mindestens einer Registrierkasse (14) und mindestens einem Peripheriegerät (18);
(b) einen Ladengeschäft-Kommunikationsbus (12), der mit der genannten mindestens einen Registrierkasse verbunden ist;
(c) eine Ladengeschäft-Steuereinheit (19), die mit dem genannten Ladengeschäft-Kommunikationsbus verbunden ist, um Daten zu steuern und der genannten mindestens einen Registrierkasse zuzuführen;
(d) einen Zusatzprozessor (16) zur Ausführung von Aufgaben, die zusätzlich zu den Aufgaben der genannten Ladengeschäft-Steuereinheit ausgeführt werden;
(e) mindestens einen Portkonzentrator (30), der einer entsprechenden Kassenterminal-Kassenstation der genannten mindestens einen Kassenterminal-Kassenstation zugeordnet ist, wobei der genannte mindestens eine Portkonzentrator eine Mehrzahl von Ein-Ausgabeports aufweist, wobei ein Ein-Ausgabeport der genannten Mehrzahl von Ein-Ausgabeports mit dem genannten mindestens einen Peripheriegerät der genannten entsprechenden Kassenterminal-Kassenstation gekoppelt ist; und
(f) ein Portkonzentrator-Kommunikationsnetz (36), das mit dem genannten Zusatzprozessor und dem genannten mindestens einen Portkonzentrator gekoppelt ist;
(g) wobei der genannte Zusatzprozessor mit dem genannten mindestens einen Peripheriegerät der genannten mindestens einen Kassenterminal-Kassenstation über das genannte Portkonzentrator-Kommunikationsnetz und einem entsprechenden Portkonzentrator des genannten mindestens einen Portkonzentrators kommuniziert.

2. System nach Anspruch 1, wobei der genannte mindestens eine Portkonzentrator (30) ferner folgendes aufweist:
(a) einen Pufferspeicher (64, 66) zum Speichern von Daten, die von einem beliebigen der genannten Mehrzahl von Ein-Ausgabeports vor der Datenübertragung durch einen anderen Port der genannten Mehrzahl von Ein-Ausgabeports übertragen werden;
(b) eine Einrichtung (62, 68) zur Regelung des Datenflusses in dem genannten mindestens einen Portkonzentrator zu und von der genannten Mehrzahl von Ein-Ausgabeports.

3. System nach Anspruch 1, wobei:
(a) es sich bei dem genannten Portkonzentrator-Kommunikationsnetz um ein lokales Netz (LAN) (36) handelt; und
(b) wobei der genannte mindestens eine Portkonzentrator (30) ferner einen LAN-Controller und Transceiver (68) zur Kommunikation mit dem genannten Portkonzentrator-Kommunikationsnetz aufweist.

4. System nach Anspruch 1, wobei das genannte mindestens eine Peripheriegerät entweder eine Scanvorrichtung (42) zum Lesen von Produktdaten, eine Wedge-Dateneingabevorrichtung (22) zum Lesen von Konsumentendaten aus einem von einem Konsumenten vorgelegten Daten aufweisenden Datensatz oder eine Zusatzvorrichtung (46) zur Ausführung von Zusatzfunktionen darstellt.

5. System nach Anspruch 1, wobei:
(a) die genannte Kassenterminal-Kassenstation ferner mindestens einen Coupondrucker (44) umfasst, der mit einem entsprechenden Portkonzentrator des genannten mindestens einen Portkonzentrators gekoppelt ist; und
(b) der genannte Zusatzprozessor (16) mit mindestens einem Coupondrucker der genannten mindestens einen Kassenterminal-Kassenstation über das genannte Portkonzentrator-Kommunikationsnetz und den genannten entsprechenden Portkonzentrator des genannten mindestens einen Portkonzentrators kommuniziert.

6. System nach Anspruch 5, wobei der genannte Zusatzprozessor (16) einen entsprechenden Coupondrucker (44) des genannten mindestens einen Coupondruckers an einer entsprechenden Kassenterminal-Kassenstation der genannten mindestens einen Kassenterminal-Kassenstation steuert und auf der Basis von von der genannten entsprechenden Kassenterminal-Kassenstation über einen entsprechenden Portkonzentrator des genannten mindestens einen Portkonzentrators empfangenen Daten bestimmt, ob Coupons gedruckt werden sollen.

7. System nach einem der Ansprüche 1 bis 6, wobei:
(a) die genannte mindestens eine Kassenterminal-Kassenstation eine Mehrzahl von Kassenstationen umfasst; und
(b) der genannte mindestens eine Portkonzentrator (30) eine Mehrzahl von Portkonzentratoren umfasst.

8. Portkonzentrator zur Verwendung in einem Kassenterminal-Computersystem mit mindestens einer Kassenterminal-Kassenstation mit einer Registrierkasse (14), einem Coupondrucker (44) und mindestens einem Peripheriegerät (46), wobei der Portkonzentrator folgendes umfasst:
(a) einen ersten Port zur Kopplung mit dem genannten mindestens einen Peripheriegerät; und
(b) einen zweiten Port zur Kopplung mit einem Zusatzprozessor über ein Portkonzentrator-Kommunkationsnetz;
(c) wobei der genannte Zusatzprozessor mit mindestens einem Peripheriegerät an einer entsprechenden Kassenterminal-Kassenstation der genannten mindestens einen Kassenterminal-Kassenstation über das genannte Portkonzentrator-Kommunikationsnetz und einen entsprechenden Portkonzentrator kommuniziert, der der genannten Kassenterminal-Kassenstation zugeordnet ist.

9. Portkonzentrator nach Anspruch 8, wobei der Portkonzentrator ferner folgendes umfasst:
(a) einen Pufferspeicher (64, 66) zum Speichern der von einem beliebigen der ersten und zweiten Ports empfangenen Daten vor der Übertragung der genannten Daten durch einen anderen der genannten ersten und zweiten Ports; und
(b) eine Einrichtung zur Regelung des Datenflusses in dem genannten Portkonzentrator zu und von jedem der genannten ersten und zweiten Ports.

10. Portkonzentrator nach Anspruch 8, wobei:
(a) es sich bei dem genannten Portkonzentrator-Kommunikationsnetz um ein lokales Netz (LAN) (36) handelt; und
(b) der genannte Portkonzentrator ferner einen LAN-Controller (68) und Transceiver zur Kommunikation mit dem genannten Portkonzentrator-Kommunikationsnetz aufweist.

11. Portkonzentrator nach Anspruch 8, wobei es sich bei dem genannten mindestens einen Peripheriegerät entweder um eine Scanvorrichtung (42) zum Lesen von Produktdaten, eine Wedge-Dateneingabevorrichtung (22) zum Lesen von Konsumentendaten aus einem von einem Konsumenten vorgelegten Daten aufweisenden Datensatz oder eine Zusatzvorrichtung (46) zur Ausführung von Zusatzfunktionen handelt.

12. Portkonzentrator nach Anspruch 8, wobei der Portkonzentrator ferner folgendes umfasst:
(a) einen dritten Port zur Kopplung mit dem genannten Coupondrucker;
(b) wobei der genannte Zusatzprozessor mit dem genannten Coupondrucker an einer entsprechenden Kassenterminal-Kassenstation der genannten mindestens einen Kassenterminal-Kassenstation über das genannte Portkonzentrator-Kommunikationsnetz und einen entsprechenden Portkonzentrator kommuniziert, der der genannten entsprechenden Kassenterminal-Kassenstation zugeordnet ist.

13. Portkonzentrator nach Anspruch 12, wobei der genannte Zusatzprozessor den genannten Coupondrucker an einer entsprechenden Kassenterminal-Kassenstation der genannten mindestens einen Kassenterminal-Kassenstation steuert und auf der Basis von von der genannten entsprechenden Kassenterminal-Kassenstation über den genannten Portkonzentrator, der der genannten entsprechenden Kassenterminal-Kassenstation zugeordnet ist, empfangenen Daten bestimmt, ob Coupons gedruckt werden sollen.

14. Portkonzentrator nach Anspruch 12, wobei der Portkonzentrator ferner folgendes umfasst:
(a) einen Pufferspeicher (64, 66) zum Speichern von Daten, die von einem der ersten bis dritten Ports empfangen worden sind, und zwar vor der Datenübertragung über einen anderen der genannten ersten bis dritten Ports; und
(b) eine Einrichtung zur Regelung des Datenflusses in dem genannten Portkonzentrator zu und von jedem der genannten ersten bis dritten Ports.

15. Verfahren zum Vorsehen eines Kassenterminal-Computersystems, wobei das Verfahren folgendes umfasst:
(a) Vorsehen mindestens einer Kassenterminal-Kassenstation, die mindestens eine Registrierkasse (14) und mindestens ein Peripheriegerät (18) aufweist;
(b) Verbinden eines Ladengeschäft-Kommunikationsbusses (12) mit der genannten mindestens einen Registrierkasse;
(c) Steuern (10) und Zuführen von Daten an die genannte mindestens eine Registrierkasse über eine Ladengeschäft-Steuereinheit, die mit dem genannten Ladengeschäft-Kommunikationsbus verbunden ist;
(d) Ausführen von Aufgaben, die durch die genannte Ladengeschäft-Steuereinheit zusätzlich über einen Zusatzprozessor ausgeführt werden;
(e) Vorsehen mindestens eines Portkonzentrators (30), der einer entsprechenden Kassenterminal-Kassenstation der genannten mindestens einen Kassenterminal-Kassenstationen zugeordnet ist, wobei der genannte mindestens eine Portkonzentrator eine Mehrzahl von Ein-Ausgabeports aufweist, und wobei ein Ein-Ausgabeport der genannten Mehrzahl von Ein-Ausgabeports mit dem genannten mindestens einen Peripheriegerät der genannten entsprechenden Kassenterminal-Kassenstation gekoppelt wird;
(f) Koppeln eines Portkonzentrator-Kommunikationsnetzes mit dem genannten Zusatzprozessor und mit dem genannten mindestens einen Portkonzentrator; und
(g) Vorsehen einer Kommunikation zwischen dem genannten Zusatzprozessor und dem genannten mindestens einen Peripheriegerät der genannten mindestens einen Kassenterminal-Kassenstation über das genannte Portkonzentrator-Kommunikationsnetz und einen entsprechenden Portkonzentrator des genannten mindestens einen Portkonzentrators.

16. Verfahren nach Anspruch 15, wobei der genannte Schritt (e) ferner folgendes aufweist:
(a) Vorsehen eines Pufferspeichers (64, 66) in dem genannten mindestens einen Portkonzentrator, wobei der Pufferspeicher von einem Port der genannten Mehrzahl von Ein-Ausgabeports empfangene Daten speichert, und zwar vor der Übertragung der genannten Daten über einen anderen Port der genannten Mehrzahl von Ein-Ausgabeports; und
(b) Vorsehen einer Einrichtung (68) zur Regelung des Datenflusses in dem genannten mindestens einen Portkonzentrator in dem genannten mindestens einen Portkonzentrator zu und von der genannten Mehrzahl von Ein-Ausgabeports.

17. Verfahren nach Anspruch 15, wobei es sich bei dem genannten Portkonzentrator-Kommunikationsnetz um ein lokales Netz (LAN) handelt, und wobei das Verfahren ferner das Vorsehen eines LAN-Controllers und Transceivers (68) zur Kommunikation mit dem genannten Portkonzentrator-Kommunikationsnetz in dem genannten einen Portkonzentrator umfasst.

18. Verfahren nach Anspruch 15, wobei es sich bei dem genannten mindestens einen Peripheriegerät entweder um eine Scanvorrichtung (42) zum Lesen von Produktdaten, eine Wedge-Dateneingabevorrichtung (22) zum Lesen von Konsumentendaten aus einem von einem Konsumenten vorgelegten Daten aufweisenden Datensatz oder eine Zusatzvorrichtung (46) zur Ausführung von Zusatzfunktionen handelt.

19. Verfahren nach Anspruch 15, wobei das Verfahren ferner folgendes umfasst:
(a) Vorsehen mindestens eines Coupondruckers (44) in der genannten mindestens einen Kassenterminal-Kassenstation, wobei der Drucker mit einem entsprechenden Portkonzentrator des genannten mindestens einen Portkonzentrators gekoppelt ist; und
(b) Vorsehen einer Kommunikation zwischen dem genannten Zusatzprozessor und dem genannten mindestens einen Coupondrucker der genannten Kassenterminal-Kassenstation über das genannte Portkonzentrator-Kommunikationsnetz und den genannten entsprechenden Portkonzentrator des genannten mindestens einen Portkonzentrators.

20. Verfahren nach Anspruch 19, wobei das Verfahren ferner folgendes umfasst:
(a) Steuern eines entsprechenden Coupondruckers des genannten mindestens einen Coupondruckers an einer entsprechenden Kassenterminal-Kassenstation der genannten mindestens einen Kassenterminal-Kassenstation über den genannten Zusatzprozessor; und
(b) Bestimmen, ob Coupons gedruckt werden sollen, und zwar auf der Basis der von der genannten entsprechenden Kassenterminal-Kassenstation über einen entsprechenden Portkonzentrator des genannten mindestens einen Portkonzentrators über den genannten Zusatzprozessor empfangenen Daten.

21. Verfahren nach Anspruch 15, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren als der genannte mindestens eine Portkonzentrator.

22. Verfahren nach Anspruch 16, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren als der genannte mindestens eine Portkonzentrator.

23. Verfahren nach Anspruch 17, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren als der genannte mindestens eine Portkonzentrator.

24. Verfahren nach Anspruch 18, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren (30) als der genannte mindestens eine Portkonzentrator.

25. Verfahren nach Anspruch 19, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren (30) als der genannte mindestens eine Portkonzentrator.

26. Verfahren nach Anspruch 20, wobei das Verfahren ferner folgendes umfasst:
(a) Vorsehen einer Mehrzahl von Kassenstationen als die genannte mindestens eine Kassenterminal-Kassenstation; und
(b) Vorsehen einer Mehrzahl von Portkonzentratoren (30) als der genannte mindestens eine Portkonzentrator.

27. Verfahren zum Vorsehen eines Portkonzentrators zur Verwendung in einem Kassenterminal-Computersystem mit mindestens einer Kassenterminal-Kassenstation mit einer Registrierkasse (14), einem Coupondrucker (18) und mindestens einem Peripheriegerät (18), wobei das Verfahren ferner die folgenden Schritte umfasst:
(a) Vorsehen eines ersten Ports zur Kopplung mit dem genannten mindestens einen Peripheriegerät in dem genannten Portkonzentrator;
(b) Vorsehen eins zweiten Ports zur Kopplung mit einem Zusatzprozessor über ein Portkonzentrator-Kommunikationsnetz in dem genannten Portkonzentrator; und
(c) Vorsehen einer Kommunikation zwischen dem genannten Zusatzprozessor und dem genannten mindestens einen Zusatzgerät an einer entsprechenden Kassenterminal-Kassenstation der genannten mindestens einen Kassenterminal-Kassenstation über das genannte Portkonzentrator-Kommunikationsnetz und einen entsprechenden Portkonzentrator, der der genannten entsprechenden Kassenterminal-Kassenstation zugeordnet ist.

28. Verfahren nach Anspruch 27, wobei das Verfahren ferner folgendes umfasst:
(a) Vorsehen eines Pufferspeichers in dem genannten Portkonzentrator, wobei der Pufferspeicher von einem der genannten ersten und zweiten Ports empfangene Daten speichert, und zwar vor der Übertragung der genannten Daten durch einen anderen der genannten ersten und zweiten Ports; und
(b) Vorsehen einer Einrichtung zur Regelung des Datenflusses in dem genannten Portkonzentrator in dem genannten Portkonzentrator zu und von jedem der genannten ersten und zweiten Ports.

29. Verfahren nach Anspruch 27, wobei es sich bei dem genannten Portkonzentrator-Kommunikationsnetz um ein lokales Netz (LAN) handelt, und wobei ferner in dem genannten Portkonzentrator ein LAN-Controller und Transceiver zur Kommunikation mit dem genannten Portkonzentrator-Kommunkationsnetz vorgesehen wird.

30. Verfahren nach Anspruch 27, wobei es sich bei dem genannten mindestens einen Peripheriegerät entweder um eine Scanvorrichtung (42) zum Lesen von Produktdaten, eine Wedge-Dateneingabevorrichtung (22) zum Lesen von Konsumentendaten aus einem von einem Konsumenten vorgelegten Daten aufweisenden Datensatz oder eine Zusatzvorrichtung (46) zur Ausführung von Zusatzfunktionen handelt.

31. Verfahren nach Anspruch 27, wobei das Verfahren ferner folgendes umfasst:
(a) Vorsehen eines dritten Ports zur Kopplung mit dem genannten Coupondrucker in dem genannten Portkonzentrator;
(b) Vorsehen einer Kommunikation zwischen dem genannten Zusatzprozessor und dem genannten Coupondrucker an einer entsprechenden Kassenterminal-Kassenstation der genannten mindestens einen Kassenterminal-Kassenstation über das genannte Portkonzentrator-Kommunikationsnetz und einen entsprechenden Portkonzentrator, der der genannten entsprechenden Kassenterminal-Kassenstation zugeordnet ist.

32. Verfahren nach Anspruch 31, wobei das Verfahren ferner folgendes umfasst:
(a) Steuern des genannten Coupondruckers an einer entsprechenden Kassenterminal-Kassenstation der genannten mindestens einen Kassenterminal-Kassenstation über den genannten Zusatzprozessor; und
(b) Bestimmen, ob Coupons gedruckt werden sollen, und zwar auf der Basis von Daten, die von der genannten entsprechenden Kassenterminal-Kassenstation über den genannten Portkonzentrator empfangen werden, der der genannten Kassenterminal-Kassenstation zugeordnet ist, über den genannten Zusatzprozessor.

33. Verfahren nach Anspruch 31, wobei das Verfahren ferner folgendes umfasst:
(a) Vorsehen eines Pufferspeichers in dem genannten Portkonzentrator zum Speichern von Daten, die von einem der genannten ersten bis dritten Ports empfangen werden, und zwar vor der Datenübertragung durch einen anderen der genannten ersten bis dritten Ports; und
(b) Vorsehen einer Einrichtung zur Regelung des Datenflusses in dem genannten Portkonzentrator in dem genannten Portkonzentrator zu und von jedem der genannten ersten bis dritten Ports.

34. Computer lesbares Medium, das Computerbefehle speichert, zur Ausführung der in einem der Ansprüche 15 bis 33 ausgeführten Schritte.

35. Computerprogramm, das eine Computerprogrammcodeeinrichtung umfasst, die sich dazu eignet, alle Schritt der Ansprüche 15 bis 33 auszuführen, wenn das Programm auf einem Computer ausgeführt wird.

## Revendications

1. Système informatique de point de vente, comprenant :
(a) au moins une station de contrôle de point de vente ayant au moins une caisse enregistreuse (14) et au moins un dispositif périphérique (18) ;
(b) un bus de communication de magasin (12) connecté à ladite au moins une caisse enregistreuse ;
(c) un contrôleur de magasin (10) connecté audit bus de communication de magasin, pour contrôler et fournir des données à ladite au moins une caisse enregistreuse ;
(d) un processeur supplémentaire (16) pour réaliser des tâches supplémentaires par rapport aux tâches réalisées par ledit contrôleur de magasin ;
(e) au moins un concentrateur de ports (30) associé à une station de contrôle de point de vente respective de ladite au moins une station de contrôle de point de vente, ledit au moins un concentrateur de ports ayant plusieurs ports d'entrée/de sortie, un port d'entrée/de sortie desdits plusieurs ports d'entrée/de sortie couplé audit au moins un dispositif périphérique de ladite station de contrôle de point de vente respective ; et
(f) un réseau de communication de concentrateur de ports (36) couplé audit processeur supplémentaire et audit au moins un concentrateur de ports ;
(g) dans lequel ledit processeur supplémentaire communique avec ledit au moins un dispositif périphérique de ladite au moins une station de contrôle de point de vente via ledit réseau de communication de concentrateur de ports et un concentrateur de ports respectif dudit au moins un concentrateur de ports.

2. Système selon la revendication 1, dans lequel ledit au moins un concentrateur de ports (30) comprend en outre :
(a) une mémoire tampon (64, 66) pour stocker les données reçues de l'un quelconque desdits plusieurs ports d'entrée/de sortie, avant la transmission desdites données via un autre desdits plusieurs ports d'entrée/de sortie ; et
(b) des moyens (62, 68) pour réguler le flux de données dans ledit au moins un concentrateur de ports, vers et depuis lesdits plusieurs ports d'entrée/de sortie.

3. Système selon la revendication 1, dans lequel :
(a) ledit réseau de communication de concentrateur de ports est un réseau local d'entreprise (36) ; et
(b) ledit au moins un concentrateur de ports (30) comprend en outre un contrôleur et émetteur/récepteur de réseau local d'entreprise (68) pour communiquer avec ledit réseau de communication de concentrateur de ports.

4. Système selon la revendication 1, dans lequel ledit au moins un dispositif périphérique est l'un parmi un dispositif de scannage (42) pour lire des données de produit, un dispositif d'entrée de données « décodeur d'interface » (22) pour lire les données du consommateur à partir d'un enregistrement supportant des données présenté par un consommateur, et un dispositif auxiliaire (46) pour réaliser des fonctions auxiliaires.

5. Système selon la revendication 1, dans lequel :
(a) ladite au moins une station de contrôle de point de vente comprend en outre au moins une imprimante de bons (44) couplée à un concentrateur de ports respectif dudit au moins un concentrateur de ports ; et
(b) ledit processeur supplémentaire (16) communique avec ladite au moins une imprimante de bons de ladite au moins une station de contrôle de point de vente via ledit réseau de communication de concentrateur de ports et ledit concentrateur de ports respectif dudit au moins un concentrateur de ports.

6. Système selon la revendication 5, dans lequel ledit processeur supplémentaire (16) contrôle une imprimante de bons (44) respective de ladite au moins une imprimante de bons au niveau d'une station de contrôle de point de vente respective de ladite au moins une station de contrôle de point de vente, et détermine si des coupons doivent être imprimés sur la base des données reçues de ladite station de contrôle de point de vente respective via un concentrateur de ports respectif dudit au moins un concentrateur de ports.

7. Système selon l'une quelconque des revendications 1 à 6, dans lequel :
(a) ladite au moins une station de contrôle de point de vente comprend une pluralité de stations de contrôle ; et
(b) ledit au moins un concentrateur de ports (30) comprend une pluralité de concentrateur de ports.

8. Concentrateur de ports à utiliser dans un système informatique de point de vente comprenant au moins une station de contrôle de point de vente ayant une caisse enregistreuse (14), une imprimante de bons (44) et au moins un dispositif périphérique (46), le concentrateur de ports comprenant :
(a) un premier port pour assurer le couplage audit au moins un dispositif périphérique ; et
(b) un deuxième port pour assurer le couplage à un processeur supplémentaire via un réseau de communication de concentrateur de ports ;
(d) dans lequel ledit processeur supplémentaire communique avec ledit au moins un dispositif périphérique au niveau d'une station de contrôle de point de vente respective de ladite au moins une station de contrôle de point de vente via ledit réseau de communication de concentrateur de ports et un concentrateur de ports respectif associé à ladite station de contrôle de point de vente respective.

9. Concentrateur de ports selon la revendication 8, comprenant en outre :
(a) une mémoire tampon (64, 66) pour stocker les données reçues de l'un quelconque desdits premier et deuxième ports, avant la transmission desdites données via un autre desdits premier et deuxième ports ; et
(b) des moyens pour réguler le flux de données dans ledit concentrateur de ports, vers et depuis chacun desdits premier et deuxième ports.

10. Concentrateur de ports selon la revendication 8, dans lequel :
(a) ledit réseau de communication de concentrateur de ports est un réseau local d'entreprise (36) ; et
(b) ledit concentrateur de ports comprend également un contrôleur et émetteur/récepteur (68) de réseau local d'entreprise pour communiquer avec ledit réseau de communication de concentrateur de ports.

11. Concentrateur de ports selon la revendication 8, dans lequel ledit au moins un dispositif périphérique est l'un parmi un dispositif de scannage (42) pour lire des données de produit, un dispositif d'entrée de données décodeur d'interface (22) pour lire les données du consommateur à partir d'un enregistrement supportant des données présenté par un consommateur, et un dispositif auxiliaire (46) pour réaliser des fonctions auxiliaires.

12. Concentrateur de ports selon la revendication 8, comprenant en outre :
(a) un troisième port pour assurer le couplage à ladite imprimante de bons ;
(b) dans lequel ledit processeur supplémentaire communique avec ladite imprimante de bons au niveau d'une station de contrôle de point de vente respective de ladite au moins une station de contrôle de point de vente via ledit réseau de communication de concentrateur de ports et un concentrateur de ports respectif associé à ladite station de contrôle de point de vente respective.

13. Concentrateur de ports selon la revendication 12, dans lequel ledit processeur supplémentaire contrôle ladite imprimante de bons au niveau d'une station de contrôle de point de vente respective de ladite au moins une station de contrôle de point de vente, et détermine si des coupons doivent être imprimés sur la base des données reçues de ladite station de contrôle de point de vente respective via ledit concentrateur de ports respectif associé à ladite station de contrôle de point de vente respective.

14. Concentrateur de ports selon la revendication 12, comprenant en outre :
(a) une mémoire tampon (64, 66) pour stocker les données reçues de l'un quelconque desdits premier à troisième ports, avant la transmission desdites données via un autre desdits premier à troisième ports ; et
(b) des moyens pour réguler le flux de données dans ledit concentrateur de ports, vers et depuis chacun desdits premier à troisième ports.

15. Processus pour fournir un système informatique de point de vente, comprenant :
(a) la fourniture d'au moins une station de contrôle de point de vente ayant au moins une caisse enregistreuse (14) et au moins un dispositif périphérique (18) ;
(b) la connexion d'un bus de communication de magasin (12) à ladite au moins une caisse enregistreuse ;
(c) le contrôle (10) et la fourniture de données à ladite au moins une caisse enregistreuse via un contrôleur de magasin connecté audit bus de communication de magasin ;
(d) la réalisation de tâches supplémentaires par rapport aux tâches réalisées par ledit contrôleur de magasin via un processeur supplémentaire ;
(e) la fourniture d'au moins un concentrateur de ports (30) associé à une station de contrôle de point de vente respective de ladite au moins une station de contrôle de point de vente, ledit au moins un concentrateur de ports ayant plusieurs ports d'entrée/de sortie, et le couplage d'un port d'entrée/de sortie desdits plusieurs ports d'entrée/de sortie audit au moins un dispositif périphérique de ladite station de contrôle de point de vente respective ;
(f) le couplage d'un réseau de communication de concentrateur de ports audit processeur supplémentaire et audit au moins un concentrateur de ports ; et
(g) la fourniture de communication entre ledit processeur supplémentaire et ledit au moins un dispositif périphérique de ladite au moins une station de contrôle de point de vente via ledit réseau de communication de concentrateur de ports et un concentrateur de ports respectif dudit au moins un concentrateur de ports.

16. Processus selon la revendication 15, dans lequel l'étape (e) comprend en outre :
(a) la fourniture dans ledit au moins un concentrateur de ports d'une mémoire tampon (64, 66) pour stocker les données reçues de l'un quelconque desdits plusieurs ports d'entrée/de sortie, avant la transmission desdites données via un autre desdits plusieurs ports d'entrée/de sortie ; et
(b) la fourniture dans ledit au moins un concentrateur de ports de moyens (68) pour réguler le flux de données dans ledit au moins un concentrateur de ports, vers et depuis lesdits plusieurs ports d'entrée/de sortie.

17. Processus selon la revendication 15, dans lequel ledit réseau de communication de concentrateur de ports est un réseau local d'entreprise et comprenant en outre, y compris dans ledit au moins un concentrateur de ports, un contrôleur et récepteur/émetteur (68) de réseau local d'entreprise pour communiquer avec ledit réseau de communication de concentrateur de ports.

18. Processus selon la revendication 15, dans lequel ledit au moins un dispositif périphérique est l'un parmi un dispositif de scannage (42) pour lire des données de produit, un dispositif d'entrée de données décodeur d'interface (22) pour lire les données du consommateur à partir d'un enregistrement supportant des données présenté par un consommateur, et un dispositif auxiliaire (46) pour réaliser des fonctions auxiliaires.

19. Processus selon la revendication 15, comprenant en outre :
(a) l'inclusion dans ladite au moins une station de contrôle de point de vente d'au moins une imprimante de bons (44) couplée à un concentrateur de ports respectif dudit au moins un concentrateur de ports ; et
(b) la fourniture de communication entre ledit processeur supplémentaire et ladite au moins une imprimante de bons de ladite au moins une station de contrôle de point de vente via ledit réseau de communication de concentrateur de ports et ledit concentrateur de ports respectif dudit au moins un concentrateur de ports.

20. Processus selon la revendication 19, comprenant en outre :
(a) le contrôle d'une imprimante de bons respective de ladite au moins une imprimante de bons au niveau d'une station de contrôle de point de vente respective de ladite au moins une station de contrôle de point de vente via ledit processeur supplémentaire ; et
(b) la détermination si des coupons doivent être imprimés sur la base des données reçues de ladite station de contrôle de point de vente respective via un concentrateur de ports respectif dudit au moins un concentrateur de ports via ledit processeur supplémentaire.

21. Processus selon la revendication 15, comprenant en outre :
(a) la fourniture d'une pluralité de stations de contrôle comme ladite au moins une station de contrôle de point de vente ; et
(b) la fourniture d'une pluralité de concentrateurs de ports comme ledit au moins un concentrateur de ports.

22. Processus selon la revendication 16, comprenant en outre :
(a) la fourniture d'une pluralité de stations de contrôle comme ladite au moins une station de contrôle de point de vente ; et
(b) la fourniture d'une pluralité de concentrateurs de ports comme ledit au moins un concentrateur de ports.

23. Processus selon la revendication 17, comprenant en outre :
(a) la fourniture d'une pluralité de stations de contrôle comme ladite au moins une station de contrôle de point de vente ; et
(b) la fourniture d'une pluralité de concentrateurs de ports comme ledit au moins un concentrateur de ports.

24. Processus selon la revendication 18, comprenant en outre :
(a) la fourniture d'une pluralité de stations de contrôle comme ladite au moins une station de contrôle de point de vente ; et
(b) la fourniture d'une pluralité de concentrateurs de ports (30) comme ledit au moins un concentrateur de ports.

25. Processus selon la revendication 19, comprenant en outre :
(a) la fourniture d'une pluralité de stations de contrôle comme ladite au moins une station de contrôle de point de vente ; et
(b) la fourniture d'une pluralité de concentrateurs de ports (30) comme ledit au moins un concentrateur de ports.

26. Processus selon la revendication 20, comprenant en outre :
(a) la fourniture d'une pluralité de stations de contrôle comme ladite au moins une station de contrôle de point de vente ; et
(b) la fourniture d'une pluralité de concentrateurs de ports (30) comme ledit au moins un concentrateur de ports.

27. Processus pour fournir un concentrateur de ports à utiliser dans un système informatique de point de vente comprenant au moins une station de contrôle de point de vente ayant une caisse enregistreuse (14), une imprimante de bons (18) et au moins un dispositif périphérique (46), comprenant les étapes consistant à :
(a) fournir dans ledit concentrateur de ports un premier port pour assurer le couplage audit au moins un dispositif périphérique ;
(b) fournir dans ledit concentrateur de ports un deuxième port pour assurer le couplage à un processeur supplémentaire via un réseau de communication de concentrateur de ports ; et
(d) fournir une communication entre ledit processeur supplémentaire et ledit au moins un dispositif périphérique au niveau d'une station de contrôle de point de vente respective de ladite au moins une station de contrôle de point de vente via ledit réseau de communication de concentrateur de ports et un concentrateur de ports respectif associé à ladite station de contrôle de point de vente respective.

28. Processus selon la revendication 27, comprenant en outre :
(a) la fourniture dans ledit concentrateur de ports d'une mémoire tampon pour stocker les données reçues de l'un quelconque desdits premier et deuxième ports, avant la transmission desdites données via un autre desdits premier et deuxième ports ; et
(b) la fourniture dans ledit concentrateur de ports de moyens pour réguler le flux de données dans ledit concentrateur de ports, vers et depuis chacun desdits premier et deuxième ports.

29. Processus selon la revendication 27, dans lequel ledit réseau de communication de concentrateur de ports est un réseau local d'entreprise et fournissant en outre dans ledit au moins un concentrateur de ports, un contrôleur et récepteur/émetteur de réseau local d'entreprise pour communiquer avec ledit réseau de communication de concentrateur de ports.

30. Processus selon la revendication 27, dans lequel ledit au moins un dispositif périphérique est l'un parmi un dispositif de scannage (42) pour lire des données de produit, un dispositif d'entrée de données décodeur d'interface (22) pour lire les données du consommateur à partir d'un enregistrement supportant des données présenté par un consommateur, et un dispositif auxiliaire (46) pour réaliser des fonctions auxiliaires.

31. Processus selon la revendication 27, comprenant en outre :
(a) la fourniture dans ledit concentrateur de ports d'un troisième port pour assurer le couplage à ladite imprimante de bons ;
(b) la fourniture d'une communication entre ledit processeur supplémentaire et ladite imprimante de bons au niveau d'une station de contrôle de point de vente respective de ladite au moins une station de contrôle de point de vente via ledit réseau de communication de concentrateur de ports et un concentrateur de ports respectif associé à ladite station de contrôle de point de vente respective.

32. Processus selon la revendication 31, comprenant en outre :
(a) le contrôle de ladite imprimante de bons au niveau d'une station de contrôle de point de vente respective de ladite au moins une station de contrôle de point de vente via ledit processeur supplémentaire ; et
(b) la détermination si des coupons doivent être imprimés sur la base des données reçues de ladite station de contrôle de point de vente respective via ledit concentrateur de ports respectif associé à ladite station de contrôle de point de vente respective via ledit processeur supplémentaire.

33. Processus selon la revendication 31, comprenant en outre :
(a) la fourniture dans ledit concentrateur de ports d'une mémoire tampon pour stocker les données reçues de l'un quelconque desdits premier à troisième ports, avant la transmission desdites données via un autre desdits premier à troisième ports ; et
(b) la fourniture dans ledit concentrateur de ports de moyens pour réguler le flux de données dans ledit concentrateur de ports, vers et depuis chacun desdits premier à troisième ports.

34. Support lisible sur ordinateur stockant des directives informatiques, pour réaliser les étapes décrites dans l'une quelconque des revendications 15-33.

35. Programme informatique comprenant des moyens de code de programme informatique adaptés pour réaliser toutes les étapes de l'une quelconque des revendications 15-33 lorsque ce programme est exécuté sur un ordinateur.
